# EUROPEAN PATENT SPECIFICATION

(11) **EP 4 294 984 B1**
(45) Date of publication and mention of the grant of the patent: **21.01.2026**
(21) Application number: 21763076.3
(22) Date of filing: 19.08.2021
(51) Int. Cl.: E01C 13/08, C08K 3/013

(54) **INFILL GRANULE FOR USE IN AN ARTIFICIAL TURF SYSTEM**
EINSTREUGRANULAT ZUR VERWENDUNG IN EINEM KUNSTRASENSYSTEM
GRANULÉ DE REMPLISSAGE DESTINÉ À ÊTRE UTILISÉ DANS UN SYSTÈME DE GAZON ARTIFICIEL

(30) Priority: 22.02.2021 EP 21158469
(43) Date of publication of application: 27.12.2023
(73) Proprietor: BIQ Materials AB, 475 22 Öckerö (SE)
(72) Inventor: GUMMESSON, Peter, 475 22 Öckerö (SE)
(74) Representative: Ström & Gulliksson AB
(86) International application number: PCT/EP2021/072993
(87) International publication number: WO 2022/174939

(56) References cited:
- WO-A1-2013/181705
- WO-A1-2019/125152

## Description

### Technical field of the invention

The present invention is related to a granule for use in an artificial turf system, and to an artificial turf system using such granules.

### Background

Artificial turf systems have been used for long, and have developed through a number of generations to their present form. In general, such systems seek to achieve the same characteristics as their natural counterparts although in certain areas these may have already been surpassed, at least in terms of predictability of behaviour.

At present, typical turf systems comprise a backing layer with an upper surface and an infill layer of soft granules disposed between the fibres. The backing layer may consist of a woven fabric in which artificial grass fibres are tufted to provide pile fibres oriented in an upward position and fixed to the woven fabric by a backing layer of latex or polyurethane. Installation of the turf system typically involves providing a layer of loose sand, strewn between the upstanding turf fibres, which by its weight holds the backing in place and supports the pile in upward position. Onto this sand layer and also between the artificial turf fibres, granules are strewn, forming a loose performance infill layer that provides the necessary sport performance. These performance characteristics will be dependent on the intended use but for most sports will include: rotational and linear grip; force reduction; vertical ball bounce; and rotational friction. This performance can be further supported by applying a shock pad layer directly under the backing layer.

Even if such artificial turfs have now been shown to have similar, or even better, properties than natural turfs, the plastic material used in such turfs is an environmental problem. The plastic material used in the artificial turfs spreads and is broken down into micro-plastics, which contaminates the environment.

Previously known artificial turf systems are e.g. known from US 10844553, WO 2006/092337, WO 2006/025973, US 2008/0145574, US 2020/0224374, US 2015/0191879and WO 2019/125152

A method to manufacture CO₂ impregnated polymer granules and processes for preparing pre-expanded polymer beads are disclosed in WO 2013/181705. The method involves getting polymer granules in contact with pressurized and liquid CO₂, such that the polymer granules absorb the CO₂. Subsequently the CO₂ absorbed polymer granules are brought into contact with gaseous CO₂ to obtain the CO₂ impregnated polymer granules. It is also disclosed that the CO₂ impregnated polymer granules or pre-expanded polymer beads may be used as foamed polymer products. Thus, the end-product may be e.g. packing materials, insulation products and foam drinking cups. It is mentioned in WO 2013/181705 that polybutyrate adipate terephthalate (PBAT) may be used as a polymer to be impregnated with CO₂.

WO 2019/125152 describes a foam granule used as a resilient infill for artificial turf. The granule is composed of a vinyl butyral comprising polymer, having a mean size of 0.5-5 mm, wherein the granules are tack resistant, i.e. the granules do not stick to each other.However, there is still a need for an environmentally friendly solution for use in artificial turfs, which have similar or even better properties than natural turfs, which is environmentally friendly and resistant to UV-degradation.

### Summary of the invention

It is therefore an object of the present invention to provide an artificial turf system, and granules for use therein, which alleviates all or at least some of the above-discussed drawbacks of the presently known systems.

These objects are achieved by means of an artificial turf system, and granules for use in such a system, as defined in the appended claims.

According to a first aspect of the present invention, there is provided an artificial turf system, comprising:
an artificial grass layer comprising a substrate and pile fibers upstanding from the substrate;
an infill layer, disposed on the substrate and interspersed between the pile fibers, the infill layer comprising granules, wherein said granules comprise at least 60 wt% polybutylene adipate terephthalate (PBAT) and a pigment or pigment masterbatch, wherein said pigment or pigment masterbatch is a dark green pigment configured to form a UV-light protecting surface.

According to another aspect of the present invention, there is provided a granule for use as an infill for an artificial turf system, wherein said granule comprises at least 60 wt% polybutylene adipate terephthalate (PBAT) and a pigment or pigment masterbatch, wherein said pigment or pigment masterbatch is a dark green pigment configured to form a UV-light protecting surface.

The present invention relates to the environmental issue of persistent micro plastic release from infill materials dispersed on artificial turf systems. In comparison to traditional infill materials, a relatively small amount of the present infill is required as infill, which in combination with its biodegradable properties prevents the release of persistent and harmful microplastics to the environment. Thanks to its high flexibility, the new infill in combination with an appropriate artificial turf system, provides ideal playing surfaces for a wide range of outdoor and indoor sports such as football, paddle, lacrosse, basketball, and activities on playgrounds.

PBAT is fully compostable and highly flexible, thus being a sustainable. It has also been found to have very high-performance as infill distributed on artificial turf systems to provide ideal playing surfaces for a variety of outdoor and indoor applications, such as football. The PBAT based granules may be used to provide a fully compostable and highly flexible infill material for artificial turf systems. The new granules are extremely flexible and can be made by fully compostable plastic. The granules may e.g. be shaped as cylindrical granules, highly appropriate for applications such as infill for artificial turfs. The granules alleviate the release of long-lived microplastics to the surrounding environment and nearby watercourses. The new infill is in particular useful as an infill material on artificial turfs for football, where it has passed the highest performance and quality tests by FIFA (FIFA Quality Pro). The outstanding properties are correlated to a high flexibility and softness of the material, giving rise to reduced requirement of infill (<8.5 kg/m²). Used granules may furthermore be recycled as to move towards a circular chemical economy with no harmful impact on the environment.

The pigment forms a protecting surface around the granules that protects them from UV light and hence extends the product lifetime when used as an outdoor infill material. The pigment is a dark green pigment. The pigment may be provided in the form of a pigment masterbatch. A masterbatch is here referring to a solid or liquid additive for plastics comprising a concentrated mixture of pigments, encapsulated in a carrier, such as a resin made of polymer, wax or the like. The masterbatch may contain 20-65 wt% of the pigment.

The granule(s) preferably comprises at least 70 wt% PBAT, and preferably at least 80 wt%, and most preferably at least 90 wt%. In embodiments, the content of PBAT may be at least 95 wt%, and even at least 97 wt%.

PBAT is a per se well known thermoplastic polymer, which is known to be a highly flexible and tough co-polyester.

The PBAT is preferably fossil-based or partly bio-based. Preferably, the PBAT is at least partly bio-based, i.e. Bio-PBAT.

The granule(s) preferably have/has a diameter size in the range of 0.1-5 mm, and preferably 0.5-5 mm, and more preferably 1-5 mm, and preferably 1.5-4 mm, and most preferably 1.5-3.5 mm, and with a length in the range of 1-15 mm, and preferably 1.5-10 mm, and most preferably 1.5-5 mm. Thus, the granule(s) may have a mean diameter size of 2.5 mm ± 1.0 mm and a length varying between 1-15 mm. Shorter lengths than 1 mm are also feasible, such as down to 0.5 mm or down to 0.1 mm. Thus, the length may alternatively be in the range 0.1-15 mm, 0.5-15 mm, 0.1-5 mm, 0.5-5 mm, 0.5-4 mm and the like.

The above-discussed diameters and lengths may be used for granule(s) having a cylindrical shape, having a circular cross-section. However, the same preferred diameter and lengths dimensions will apply also for granules forming cylinders with a non-circular cross-section, as well as for granules not in the form of cylinders. A diameter for non-circular cross-sections is consequently to be interpreted broadly and covers a mean cross-sectional dimension also for non-circular shapes. The diameter for such non-circular shapes may e.g. be calculated based on the perimeter of the non-circular shape, whereby the diameter d may be calculated as d = p/π.

In a preferred embodiment, the granule(s) are in the form of a cylinder. A cylinder has a uniform cross-section over its entire length. In one embodiment, the cross-section is be in the form of a circle, providing a circular cylinder. However, other cross-sectional shapes may also be used, such as shapes in the form of a triangle, a square, a rectangle, and other polygon shapes. The cross-sectional shape may also be an oval, or other, more complex shapes, such as the shape of a star, a crystal shape, a three- or four-leaf clover, etc.

In some embodiments, the granules may also be shaped in other 3-dimensional shapes than the one of a cylinder, such as in the form of a discus, a sphere or the like.

In some embodiments, the granules may be shaped as an ellipsoid. An ellipsoid has three pairwise perpendicular axes of symmetry which intersect at a center of symmetry, the center of the ellipsoid. The line segments that are delimited on the axes of symmetry by the ellipsoid may be referred to as the principal axes, or simply axes of the ellipsoid.

The granules may have the shape of an ellipsoid where the three axes have different lengths, whereby the ellipsoid may be referred to as a triaxial ellipsoid, and the axes are uniquely defined.

The granules may have the shape of an ellipsoid where two of the axes have the same length, whereas the third has a different length. In this case, the ellipsoid may be referred to as an ellipsoid of revolution, i.e. a biaxial ellipsoid or a spheroid. In this case, the ellipsoid is invariant under a rotation around the third axis.

The third axis may be shorter than the other two, whereby the ellipsoid forms an oblate spheroid. An oblate spheroid may be seen as an ellipse rotated about its minor axis, to form a flattened spheroid, shaped like a lentil.

Alternatively, the third axis may be longer than the other two, whereby the ellipsoid forms a prolate spheroid. A prolate spheroid may be seen as an ellipse rotated about its major axis, forming the shape of an American football or rugby ball.

The three axes may also have the same length, whereby the ellipsoid forms a sphere.

The granule(s) preferably have/has a Shore D hardness of 44 or less, and preferably in the range 25-44, and more preferably 32-42, and most preferably 34-40.

The granule(s) preferably have/has a flexural strength, measured in accordance with ISO 178:2019, within the range of 2-17 MPa, and preferably 3-8 MPa, and most preferably 4-6 MPa.

The granule(s) preferably have/has a flexural modulus, measured in accordance with ISO 178:2019, of 50-250 MPa, and preferably 55-150 MPa, and most preferably 60-90 MPa.

The granule(s) preferably have/has an offset stretch (0.2%), measured in accordance with ISO 178:2019, of 1-10 MPa, and preferably 2-7 MPa, and most preferably 3-6 MPa.

The granule(s) may comprise PBAT as the only polymeric constituent. However, the granule(s) may also comprise a blend of PBAT and one or more other thermoplastic polymers. In that case, the polymeric part of the blend, excluding possible filler material, preferably comprises at least 70 wt% of PBAT and 30 wt% or less of the other thermoplastic polymer(s). Put differently, in case other thermoplastic polymers are included in the blend, in addition to PBAT, the total amount of these other thermoplastic polymers is preferably less than half the amount of PBAT.

The granule(s) may further comprise 1-30 wt% of another compostable polymer, and preferably at least one of: polyethylene furanoate (PEF), polyhydroxy alkanoates (PHA), polylactic acid (PLA), polybutylene succinate (PBS), poly(butylene succinate-co-butylene adipate) (PBSA), polycaprolactone (PCL), thermoplastic starch (TPS), and starch, or combinations thereof. Such materials may be included in the blend to adjust the hardness, flexibility, and other properties of the material.

The granule(s) may comprise 1-30 wt% of another biobased polymer, and preferably at least one of: PLA, polyhydroxy alkanoates (PHA), polyhydroxybutyrate (PHB), polyamide 11 (PA11), polyamide 1010 (PA1010), Bio-polyethylene (Bio-PE), Bio-polypropylene (Bio-PP), Bio-polyvinyl carbonate (Bio-PVC), Bio-polethylene terephthalate (Bio-PET) and Bio-polybutadiene (Bio-PBU), or combinations thereof. "Bio" here indicates that the materials are biobased. Such materials may be added to make the granule(s) even more attractive from an environmental point of view.

The granule(s) may further comprise a filler material, wherein the filler material comprises at least one of: chalk, talc, kaolin, wood fiber, bast fiber, lignocellulose, cellulose, hemicellulose, lignin, flax, and hemp, and combinations thereof. Such filler material(s) may be added to improve other properties of the material, and to facilitate other conditions and requirements. Filler materials, such as chalk or the like, may e.g. be added for the purpose of reducing cost, increasing specific density or adjusting other characteristics of the granule(s).

The total amount of the filler material(s) is preferably less than 40 wt%, and may in embodiments be less than 30 wt%, less than 20 wt%, less than 10 wt%, or less than 5 wt%. In embodiments, no filler material may be used. However, in other embodiments, the amount of filler material(s) may be at least 1 wt%, at least 5 wt%, at least 10 wt%, at least 20 wt% or at least 30 wt%. Thus, the amount of filler material(s) may be in the range of 0-40 wt%, and preferably in the range of 1-40 wt%, such as 1-30 wt%, 1-20 wt% or 1-10 wt%.

Regardless of whether the granule(s) is formed of only PBAT and pigment/pigment masterbatch, or if other constituents are added, such as other thermoplastic polymers, fillers or the like, the material is preferably blended to form a homogenous material. The granule(s) are preferably in their entirety made of homogeneous material.

For production of the granules, the material is mixed into a master batch. The material may then be extruded, to form a strand, and be cut into granules using e.g. a strand pelletizer. In the process of strand pelletizing, the strand may be fed from the die of the extruder into a cooling water bath, and subsequently be cut and dried in the pelletizer. The result may be smooth green-grey extruded granules of cylindrical shape with a mean diameter size of 2.5 mm ± 1.0 mm and a length varying between 1.0-15 mm.

Production of non-cylindric shapes can be made in a similar way, and e.g. by use of an underwater pelletizing process in an underwater pelletizer.

After use, the granules are fully compostable. Specifically, preliminary tests indicate that the above-discussed granule(s) meets the requirements related to disintegration specified in the standard ISO 20200 (Disintegration test).

The granules may also be recycled by gathering the granules, separating them from dust, washing, drying, and re-processing them, to increase the bio-sustainability.

The artificial turf system may further comprise a resilient layer comprising a shock-pad structure beneath the substrate and an additional particulate layer between the shock-pad structure and the infill layer. The additional particulate layer may comprise particulates of at least one of: sand, grit, rubber, cork, wood, elastomer and plastic particulates, or combinations thereof. In a preferred embodiment, the additional particulate layer comprises sand.

These and other features and advantages of the present invention will in the following be further clarified with reference to the embodiments described hereinafter.

### Brief description of the drawings

For exemplifying purposes, the invention will be described in closer detail in the following with reference to embodiments thereof illustrated in the attached drawings, wherein:
Fig. 1 is a schematic illustration of a granule for use as an infill for an artificial turf, in in accordance with an embodiment of the present invention;
Fig. 2 is a schematic cross-sectional view illustrating an artificial turf in accordance with an embodiment of the present invention;
Figs. 3a-g are schematic illustrations of cylindrical granules with other geometries, in accordance with other embodiments of the present invention;
Figs. 4a-d are schematic illustrations of non-cylindrical granules with different geometries, in accordance with other embodiments of the present invention.

### Detailed description

In the following detailed description, preferred embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

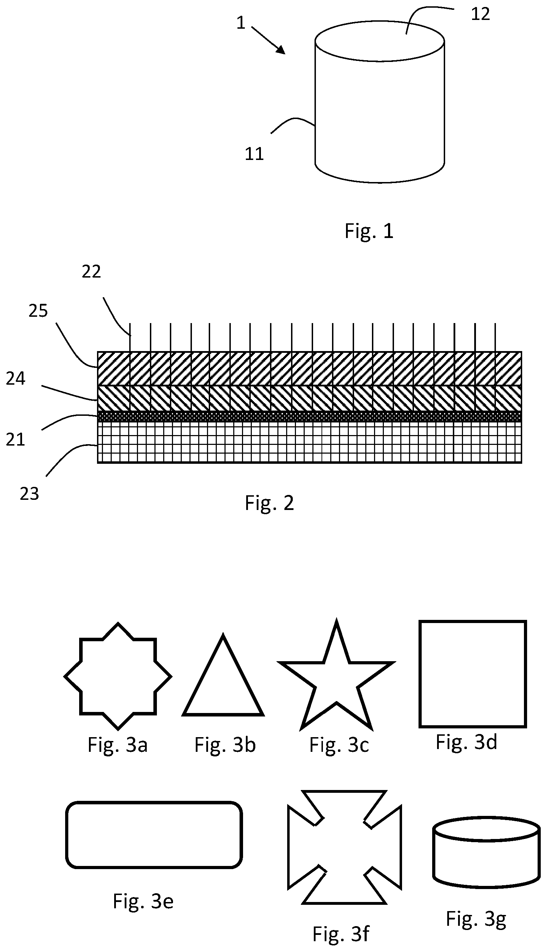

An embodiment of a granule for use as an infill for an artificial turf system is schematically illustrated in Fig. 1. Here, the granule has a cylindrical shape with a circular cross-section, i.e. a circular cylinder. The diameter size may be in the range of 0.1-5 mm, and preferably 0.5-5 mm, and more preferably 1-5 mm, and more preferably 1-4 mm, and most preferably 1.5-3.5 mm, and the length may be in the range of 1-15 mm, and preferably 1-10 mm, and most preferably 1-5 mm.

The above-discussed diameters and lengths may be used also for granule(s) having a cylindrical shape with non-circular cross-sections, as well as for non-cylindrical granule(s), as will be exemplified in more detail in the following. In such cases, a diameter for non-circular cross-sections relates to is a mean cross-sectional dimension. The diameter for such non-circular shapes may e.g. be calculated based on the perimeter of the non-circular shape, whereby the diameter d may be calculated as d = p/π.

However, the granule may also be in the form of other cylindrical shapes, having other cross-sections. Such alternative shapes are schematically illustrated in Figs. 3a-i. For example, the cylinder may have a cross-sectional shape in the form of a crystal, as shown in Fig. 3a. Here, the crystal shape is generally in the shape of two overlaid squares, 45 degrees rotated in relation to each other. However, other crystal shapes are also feasible. The cross-section may also be in the form of a triangle, as shown in Fig. 3b, a square, as shown in Fig. 3d, and a rectangle, as shown in Fig. 3e. However, other polygon shapes are also feasible, such as in the form of a star, as illustrated in Fig. 3c. The star here has five radiating points, but may also have less radiating points, such as 3 or 4, or more radiating points, such as 6 or 7. The polygon may have relatively sharp corners, as in the example of Fig. 3d, or rounded corners, as in the example of Fig. 3e. The cross-sectional shape may also be an oval or the like. The cross-sectional shape may also be a more complex shape, such as the shape of a three- or four-leaf clover, as illustrated in Fig. 3f, etc.

The cylinder may have a length which is greater than the diameter, as in the illustrative example of Fig. 1. However, the cylinder may also have a diameter which is essentially the same as the length. The cylinder may also have a diameter which is greater than the length, as in the illustrative example of Fig. 3g.

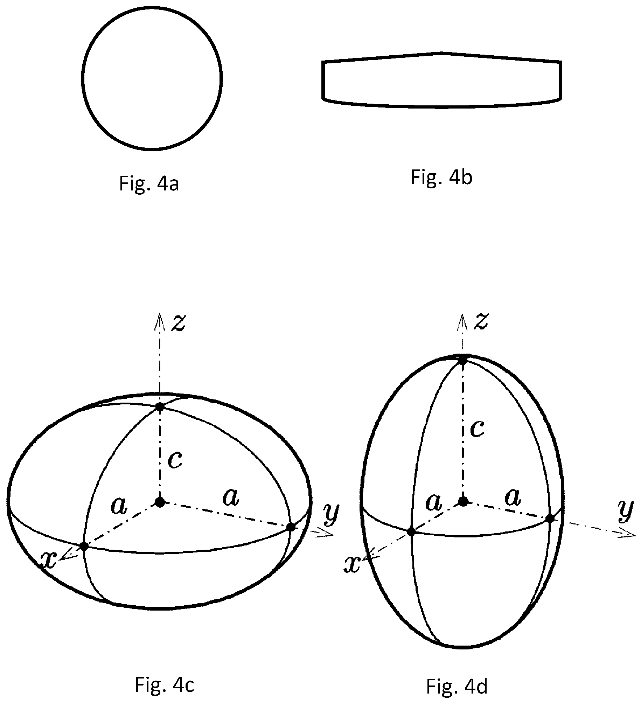

In some embodiments, the granules may also be shaped in other 3-dimensional shapes than the one of a cylinder, such as in the form of a sphere, as schematically illustrated in Fig. 4a, in the form of a discus, as schematically illustrated in Fig. 4b, or the like. The discus shape is here generally a flat cylinder but with curved, convex base surfaces.

In some embodiments, the granules may be shaped as an ellipsoid. An ellipsoid has three pairwise perpendicular axes of symmetry which intersect at a center of symmetry, the center of the ellipsoid. The line segments that are delimited on the axes of symmetry by the ellipsoid may be referred to as the principal axes, or simply axes of the ellipsoid.

The granules may have the shape of an ellipsoid where the three axes have different lengths, whereby the ellipsoid may be referred to as a triaxial ellipsoid, and the axes are uniquely defined.

The granules may, as illustrated in Figs. 4c and 4d, have the shape of an ellipsoid where two of the axes x and y have the same length a, whereas the third axis z has a different length c. In this case, the ellipsoid may be referred to as an ellipsoid of revolution, i.e. a biaxial ellipsoid or a spheroid. In this case, the ellipsoid is invariant under a rotation around the third axis.

The third axis z, i.e. the length c, may be shorter than the other two axes, i.e. the radius a, whereby the ellipsoid forms an oblate spheroid, as illustrated in Fig. 4c. An oblate spheroid may be seen as an ellipse rotated about its minor axis, to form a flattened spheroid, shaped like a lentil. Here, the length of the granule is c, and the diameter is 2*a, and c < a.

Alternatively, the third axis z, i.e. the length c, may be longer than the other two axes, i.e. the radius a, whereby the ellipsoid forms a prolate spheroid, as illustrated in Fig. 4d. A prolate spheroid may be seen as an ellipse rotated about its major axis, forming the shape of an American football or rugby ball. Here, the length of the granule is c, and the diameter is 2*a, and c > a.

The three axes may also have the same length, whereby the ellipsoid forms a sphere, as in the illustrative example of Fig. 4a.

The above-discussed shapes, and in particular the cylindrical shapes and the spheroid shapes, provides granules that immediately reach a packed structure when placed as an infill layer in an artificial turf system. This packed structure is reached directly after installation and is stable during time because it cannot compact more than this. However, the particles are loose enough to move under influence of force. This results in a structure of the infill layer, which is responsible for a natural turf character.

The granules may be used as an infill for an artificial turf system. Such an artificial turf system is schematically illustrated in Fig. 2. The artificial turf system here comprises an artificial grass layer comprising a substrate 21 and pile fibers 22 upstanding from the substrate. The substrate 21 functions as a backing sheet, and may comprise a sheet of plastic material such as, for example, a non-woven fabric, which is impregnated with for instance latex, such as for example SBR latex. Extending upwardly from the upper surface of the substrate there is a large number of upstanding fibers 22. The length of the fibers is selected depending upon the depth of the infill material and the desired resilience of the completed artificial turf structure. The depth of the infill layer is less than the length of the fibers. The length of the fibers is for example below 50 mm. Preferably the length of the fibers is below 45 mm.

The fibers may be synthetic fibers composed of polyethylene, polypropylene or nylon. The fibers are for example single fibers or multiple fibers but also a mixture of multiple fibers and single fibers may be used. The thickness of the fibers may vary. However also a mix of thick and thin fibers is possible. The general criteria for making the backing sheet and the fibers are known in the art, and hence do not require a detailed description.

The infill layer 25, comprising the above-discussed granules, is placed above the substrate 21. The infill layer 25 may have granules provided in the range of 5-12 kg/m², preferably 6-10 kg/m², and most preferably 7-8.5 kg/m², such as about 8 kg/m² or about 8.5 kg/m². The weight of the infill layer is preferably less than 8.5 kg/m².

The infill layer can be present at a depth that is sufficient to adequately support the pile fibers over a substantial portion of their length, and may depend on the length of these fibers and the desired free pile. In a preferred embodiment, the infill layer has a depth of at least 10 mm. In other embodiments, the infill layer may be present to a depth of at least 20 mm or even to a depth of greater than 30 mm. It will be understood that the final depth will also depend upon whether the infill layer is the only layer on the substrate supporting the pile fibers and if a shock pad or other form of resilient layer is applied. In a preferred embodiment, the infill layer has a depth in the range of 10-25 mm, and preferably 15-20 mm, such as about 17 mm. Depending on the nature of the sport, the pile fibers may extend at least 10 mm or at least 15 mm or even more than 20 mm above the level of the infill.

The system may also comprise one or more additional particulate layers disposed on the substrate beneath the infill layer. The additional particulate layers may have various functions, including shock absorption, pile stabilization, drainage, filling and the like and may be selected from the group comprising: sand, grit, rubber particles, elastomer particles, thermoplastic particles and any other particles that do not meet the definition of the infill granules. In the illustrative example, the additional particulate layer 24 comprises sand, such as silica sand.

The additional particulate layer 24, here of sand, may have a weight of 10-20 kg/m², and preferably 12-17 kg/m², such as about 15 kg/m². The additional particulate layer may have a depth of 5-15 mm, such as about 10 mm.

Beneath the substrate 21 a resilient layer 23 comprising a shock-pad structure may be provided. The shock-pad may e.g. be made of PE closed-cell foam. The shock-pad may have a thickness in the range 8-15 mm, and preferably 10-13 mm, such as 12 mm, and may have a density of 25-75 kg/m³, such as 50 kg/m³.

The granules are preferably made of a homogeneous material. The material comprises at least 60 wt% polybutylene adipate terephthalate (PBAT) and a pigment or pigment masterbatch. The pigment is a dark green pigment. The pigment protects the granules from degradation due to UV radiation, and also makes the granules more heat absorbing.

The granule(s) preferably comprises at least 70 wt% PBAT, and preferably at least 80 wt%, and most preferably at least 90 wt%. In embodiments, the content of PBAT may be at least 95 wt%, and even at least 97 wt%.

The PBAT may be fossil-based, but is preferably at least partly bio-based, and may in embodiments be only bio-based, i.e. Bio-PBAT.

The granules may comprise PBAT as the only polymeric constituent. However, the granules may also comprise a blend of PBAT and one or more other thermoplastic polymers. In that case, the polymeric part of the blend, excluding possible filler material, preferably comprises at least 70 wt% of PBAT and 30 wt% or less of the other thermoplastic polymer(s). Put differently, in case other thermoplastic polymers are included in the blend, in addition to PBAT, the total amount of these other thermoplastic polymers is preferably less than half the amount of PBAT. For example, the granules may comprise 1-30 wt% of another compostable polymer, and preferably at least one of: polyethylene furanoate (PEF), polyhydroxy alkanoates (PHA), polylactic acid (PLA), polybutylene succinate (PBS), poly(butylene succinate-co-butylene adipate) (PBSA), polycaprolactone (PCL), thermoplastic starch (TPS), and starch, or combinations thereof. Such materials may be included in the blend to adjust the hardness, flexibility, and other properties of the material. Additionally, or alternatively, the granules may comprise 1-30 wt% of another biobased polymer, and preferably at least one of: PLA, polyhydroxy alkanoates (PHA), polyhydroxybutyrate (PHB), polyamide 11 (PA11), polyamide 1010 (PA1010), Bio-polyethylene (Bio-PE), Bio-polypropylene (Bio-PP), Bio-polyvinyl carbonate (Bio-PVC), Bio-polethylene terephthalate (Bio-PET) and Bio-polybutadiene (Bio-PBU), or combinations thereof.

The granules may further comprise a filler material, wherein the filler material comprises at least one of: chalk, wood fiber, lignocellulose, cellulose, hemicellulose, lignin, bast-fiber, flax and hemp, and combinations thereof. The total amount of the filler material(s) is preferably less than 40 wt%, and may in embodiments be less than 30 wt%, less than 20 wt%, less than 10 wt%, or less than 5 wt%. In embodiments, no filler material may be used. However, in other embodiments, the amount of filler material(s) may be at least 1 wt%, at least 5 wt%, at least 10 wt%, at least 20 wt% or at least 30 wt%. Thus, the amount of filler material(s) may be in the range of 0-40 wt%, and preferably in the range of 1-40 wt%, such as 1-30 wt%, 1-20 wt% or 1-10 wt%.

For production of the granules, the material is mixed into a master batch. The material may then be extruded, to form a strand, and be cut into granules using e.g. a strand pelletizer. In the process of strand pelletizing, the strand may be fed from the die of the extruder into a cooling water bath, and subsequently be cut and dried in the pelletizer. The result may be smooth green-grey extruded granules of cylindrical shape with a mean diameter size of 2.5 mm ± 1.0 mm and a length varying between 1.0-15 mm.

For production of non-cylindrical shapes, such as spheres or spheroids, pelletizing with die-face cutters may be used, where the melt is cut directly at the die opening, before a cooling medium, usually air or more often water, transports the freshly cut particles away, cooling them in process. In particular, it is possible to use underwater pelletizing for formation of such granules.

After use, the granules are fully compostable. Specifically, the granules are believed to meet the requirements related to disintegration specified in the standard ISO 20200 (Disintegration test).

The granules may also be recycled after use by gathering the granules, separating them from dust, washing, drying, and re-processing them, to increase the bio-sustainability.

For evaluation of the new granules, a number of tests have been performed. For these tests, granules comprising more than 90 wt% of PBAT were used, in combination with a dark green pigment. The granules had a cylindrical shape with a mean diameter size of 2.5 mm ± 1 mm and a length of about 1-5 mm.

The hardness and flexural properties of the granules were first examined by standardized methods using a 3 mm thin plastic plate, which was created by pressing the granules together under high pressure at 200°C. The plates were then subjected to thermal conditioning for 3 h at 23°C before testing. Compared to already existing infills, e.g. polyethylene (PE), as discussed in US 10844553, the new granules are considerably softer with a Shore D hardness of 37, measured by the Bareiss Digitest apparatus according to ISO 48-4 for two layers of the plastic plate.

It is concluded that the granules preferably should have a Shore D hardness of 44 or less, and preferably in the range 25-44, and more preferably 32-42, and most preferably 34-40.

Flexural properties of the granules were measured by the Tinius Olsen H5ST apparatus, equipped with a three-point bend test fixture, according to ISO 178:2019. In comparison to harder reference plastics (PP and PC), the new granules have a low flexural strength (5.2 MPa) and modulus of elasticity in flexure (75.7 MPa) similarly to the flexible LDPE reference, see table 1. The flexural modulus for the new granules is hence in the bottom range for semi-rigid plastics (70-700 MPa) compared to tests on harder, less flexible reference materials (PP and PC) that ended up in the rigid region (>700MPa).

**Table 1. Flexural properties from median values of three measurements on the new granules infill and three reference materials.**

| Material | Flexural strength (MPa) | | Flexural modulus (MPa) | | Offset stress 0.2% (MPa) | |
|---|---|---|---|---|---|---|
| New granules | | 5.2 | | 75.7 | | 3.8 |
| LDPE reference | | - | | 102 | | 4.6 |
| PP reference | | 18.2 | | 762 | | 15.2 |
| PC reference | | 89.8 | | 1970 | | 66.7 |

It was concluded that the new granules should preferably have a flexural strength, measured in accordance with ISO 178:2019, within the range of 2-17 MPa, and preferably 3-8 MPa, and most preferably 4-6 MPa.

It was further concluded that the granules should preferably have a flexural modulus, measured in accordance with ISO 178:2019, of 50-250 MPa, and preferably 55-150 MPa, and most preferably 60-90 MPa.

It was further concluded that the granules should preferably have an offset stretch (0.2%), measured in accordance with ISO 178:2019, of 1-10 MPa, and preferably 2-7 MPa, and most preferably 3-5 MPa.

The density of new granule material was determined to be 1.25 g/cm³ and it has a melting point of 110 °C, which is well above the application requirements.

Accelerated weathering tests, performed using the Ci5000 Weather-Ometer apparatus from ATLAS according to the SAE J1960 method, showed no visual erosion or color change for the exposed material at various temperatures, relative humidity's, and UV light intensities.

Preliminary tests on compostability of the new material has also been made, and the preliminary tests indicate . that the granules meet the requirements for compostability according to ISO 20200.

Use of the granules as infill material for an artificial turf system have also been tested. Tests according to the highest playing performance protocol (FIFA Quality Pro) were executed by SPORTS LABS. A 40 mm monofilament turf was used as a carpet together with 8 kg/m² of the above-discussed granules as an infill to a depth of approximately 17 mm on top of an approximately 10 mm thin layer of silica sand corresponding to 15 kg/m². As shockpad, a 12 mm thick PE closed-cell foam having a density of 50 kg/m³ was used.

As table 2 shows, excellent playing performance was observed in all tests in both dry and wet conditions. The combination of the new granules -infill, silica sand, carpet and shock pad hence creates an artificial turf system well within the FIFA Quality Pro requirements that is highly appropriate for both outdoor and indoor applications.

**Table 2. FIFA Quality (Pro) test results from SPORTS LABS.**

| Test | Dry test conditions | Wet test conditions | FIFA Quality Pro requirement | FIFA Quality requirement |
|---|---|---|---|---|
| Force reduction | 63.0% | 63.5% | 62 - 68 % | 57 - 68 % |
| Deformation | 9.7 mm | 9.8 mm | 6 - 10 mm | 6 - 11 mm |
| Energy restitution | 46.1% | 43.9% | - | - |
| Ball rebound | 0.66 m | 0.64 m | 0.60 - 0.85 m | 0.60 - 1.00 m |
| Rotational resistance | 33 Nm | 32 Nm | 32 - 43 Nm | 27 - 48 Nm |
| Skin-surface friction | 0.744 µ | N/a dry requirement only | ≤ 0.750 µ | ≤ 0.750 µ |
| Skin-surface abrasion | -23% | | ≤ 30 % | ≤ 30 % |

Thus, it was found that the new granule, when used as an infill for an artificial turf system, fulfilled all the requirements for both FIFA Quality and FIFA Quality Pro, both in dry and wet conditions. With out wanting to be bound by any theory, it is believed that these excellent results are at least partly due to the relatively low hardness and the great elasticity, verified by the measured flexural properties of the material.

In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. An artificial turf system, comprising:
an artificial grass layer comprising a substrate and pile fibers upstanding from the substrate;
an infill layer, disposed on the substrate and interspersed between the pile fibers, the infill layer comprising granules, wherein said granules comprise at least 60 wt% polybutylene adipate terephthalate (PBAT) and a pigment or pigment masterbatch, wherein said pigment or pigment masterbatch is a dark green pigment configured to form a UV-light protecting surface.

2. The artificial turf system of claim 1, wherein the granules comprises at least 60 wt% PBAT, and preferably at least 70 wt%, and most preferably at least 90 wt%.

3. The artificial turf system of any one of the preceding claims, wherein the granules have a diameter size in the range of 0.1-5 mm, and preferably 0.5-5 mm, and more preferably 1-5 mm, and more preferably 1.5-4 mm, and most preferably 1.5-3.5 mm, and with a length in the range of 1-15 mm, and preferably 1.5-10 mm, and most preferably 1.5-5 mm.

4. The artificial turf system of any one of the preceding claims, wherein the granules have a Shore D hardness of 44 or less, and preferably in the range 25-44, and more preferably 32-42, and most preferably 34-40, measured as indicated in the specification.

5. The artificial turf system of any one of the preceding claims, wherein the granules have a flexural strength, measured in accordance with ISO 178:2019, within the range of 2-17 MPa, and preferably 3-8 MPa, and most preferably 4-6 MPa.

6. The artificial turf system of any one of the preceding claims, wherein the granules have a flexural modulus, measured in accordance with ISO 178:2019, of 50-250 MPa, and preferably 55-150 MPa, and most preferably 60-90 MPa.

7. The artificial turf system of any one of the preceding claims, wherein the granules have an offset stretch (0.2%), measured in accordance with ISO 178:2019, of 1-10 MPa, and preferably 2-7 MPa, and most preferably 3-6 MPa.

8. The artificial turf system of any one of the preceding claims, wherein the granules further comprises 1-30 wt% of another compostable polymer, and preferably at least one of: PEF, PHA, PLA, PBS, PBSA, PCL, TPS, and starch, or combinations thereof.

9. The artificial turf system of any one of the preceding claims, wherein the granules comprises 1-30 wt% of another biobased polymer, and preferably at least one of:
PLA, PHA, PHB, , or combinations thereof.

10. The artificial turf system of any one of the preceding claims, wherein the granules further comprises a filler material, wherein the filler material comprises at least one of: chalk, talc, kaolin, wood fiber, lignocellulose, cellulose, hemicellulose, lignin, bast-fiber, flax, and hemp, and combinations thereof.

11. The artificial turf system of any one of the preceding claims, further comprising a resilient layer comprising a shock-pad structure beneath the substrate and an additional particulate layer between the shock-pad structure and the infill layer.

12. The artificial turf system of claim 11, wherein the additional particulate layer comprises particulates of at least one of: sand, grit, rubber, cork, wood, elastomer and plastic particulates, or combinations thereof, and preferably sand.

13. The artificial turf system of any one of the preceding claims, wherein the granules are shaped as ellipsoids.

14. A granule for use as an infill for an artificial turf system, wherein said granule comprises at least 60 wt% polybutylene adipate terephthalate (PBAT) and a pigment or pigment masterbatch, wherein said pigment or pigment masterbatch is a dark green pigment configured to form a UV-light protecting surface.

15. The granule according to claim 14, wherein the granule has a diameter size in the range of 0.1-5 mm, and preferably 0.5-5 mm, and more preferably 1-5 mm, and more preferably 1.5-4 mm, and most preferably 1.5-3.5 mm, and with a length in the range of 1-15 mm, and preferably 1.5-10 mm, and most preferably 1.5-5 mm.

## Patentansprüche

1. Kunstrasensystem, aufweisend:
eine Kunstrasenschicht, die ein Substrat und vom Substrat aufrecht stehende Florfasern aufweist;
eine Füllschicht, die auf dem Substrat angeordnet ist und zwischen den Florfasern verteilt ist, wobei die Füllschicht Granulate aufweist, wobei die Granulate mindestens 60 Gew.-% Polybutylenadipat-Terephthalat (PBAT) und ein Pigment oder Pigment-Masterbatch aufweisen, wobei das Pigment oder Pigment-Masterbatch ein dunkelgrünes Pigment ist, das so konfiguriert ist, dass es eine UV-Licht schützende Oberfläche bildet.

2. Kunstrasensystem nach Anspruch 1, wobei das Granulat mindestens 60 Gew.-% PBAT aufweist, und vorzugsweise mindestens 70 Gew.-% und am meisten bevorzugt mindestens 90 Gew.-%.

3. Kunstrasensystem nach einem der vorstehenden Ansprüche, wobei die Granulate einen Durchmesser im Bereich von 0,1 bis 5 mm aufweisen, und vorzugsweise 0,5 bis 5 mm, und bevorzugter 1 bis 5 mm, und bevorzugter 1,5 bis 4 mm, und am bevorzugtesten 1,5 bis 3,5 mm, und eine Länge im Bereich von 1 bis 15 mm, und vorzugsweise 1,5 bis 10 mm und am bevorzugtesten 1,5 bis 5 mm.

4. Kunstrasensystem nach einem der vorstehenden Ansprüche, wobei die Granulate eine Shore-D-Härte von 44 oder weniger aufweisen, und vorzugsweise im Bereich von 25 bis 44, bevorzugter von 32 bis 42 und am meisten bevorzugt von 34 bis 40, gemessen wie in der Beschreibung angegeben.

5. Kunstrasensystem nach einem der vorstehenden Ansprüche, wobei die Granulate eine Biegefestigkeit, gemessen gemäß ISO 178:2019, im Bereich von 2 bis 17 MPa aufweisen, und vorzugsweise 3 bis 8 MPa und am bevorzugtesten 4 bis 6 MPa.

6. Kunstrasensystem nach einem der vorstehenden Ansprüche, wobei die Granulate einen Biegeelastizitätsmodul, gemessen gemäß ISO 178:2019, von 50 bis 250 MPa aufweisen, und vorzugsweise 55 bis 150 MPa und am bevorzugtesten 60 bis 90 MPa.

7. Kunstrasensystem nach einem der vorstehenden Ansprüche, wobei die Granulate eine Offset-Dehnung (0,2 %), gemessen gemäß ISO 178:2019, von 1 bis 10 MPa aufweisen, und vorzugsweise 2 bis 7 MPa und am bevorzugtesten 3 bis 6 MPa.

8. Kunstrasensystem nach einem der vorstehenden Ansprüche, wobei die Granulate ferner 1 bis 30 Gew.-% eines anderen kompostierbaren Polymers aufweisen und vorzugsweise mindestens eines von: PEF, PHA, PLA, PBS, PBSA, PCL, TPS und Stärke, oder Kombinationen davon.

9. Kunstrasensystem nach einem der vorstehenden Ansprüche, wobei die Granulate 1 bis 30 Gew.-% eines anderen biobasierten Polymers aufweisen, und vorzugsweise mindestens eines von PLA, PHA, PHB, oder Kombinationen davon.

10. Kunstrasensystem nach einem der vorstehenden Ansprüche, wobei die Granulate ferner ein Füllmaterial aufweisen, wobei das Füllmaterial mindestens eines der Folgenden aufweist: Kreide, Talk, Kaolin, Holzfaser, Lignocellulose, Cellulose, Hemicellulose, Lignin, Bastfaser, Flachs und Hanf, sowie Kombinationen davon.

11. Kunstrasensystem nach einem der vorstehenden Ansprüche, das ferner eine elastische Schicht aufweist, die eine Stoßdämpfungsstruktur unterhalb des Substrats und eine zusätzliche Partikelschicht zwischen der Stoßdämpfungsstruktur und der Füllschicht aufweist.

12. Kunstrasensystem nach Anspruch 11, wobei die zusätzliche Partikelschicht Partikel aus mindestens einem der Folgenden aufweist: Sand, Kies, Gummi, Kork, Holz, Elastomer und Kunststoffpartikel, oder Kombinationen davon, und vorzugsweise Sand.

13. Kunstrasensystem nach einem der vorstehenden Ansprüche, wobei die Granulate als Ellipsoide geformt sind.

14. Granulat zur Verwendung als Füllmaterial für ein Kunstrasensystem, wobei das Granulat mindestens 60 Gew.-% Polybutylenadipat-Terephthalat (PBAT) und ein Pigment oder Pigment-Masterbatch aufweist, wobei das Pigment oder Pigment-Masterbatch ein dunkelgrünes Pigment ist, das so konfiguriert ist, dass es eine UV-Licht schützende Oberfläche bildet.

15. Granulat nach Anspruch 14, wobei das Granulat einen Durchmesser im Bereich von 0,1 bis 5 mm aufweist, und vorzugsweise 0,5 bis 5 mm, und bevorzugter 1 bis 5 mm, und bevorzugter 1,5 bis 4 mm, und am bevorzugtesten 1,5 bis 3,5 mm, und mit einer Länge im Bereich von 1 bis 15 mm, und vorzugsweise 1,5 bis 10 mm, und am bevorzugtesten 1,5 bis 5 mm.

## Revendications

1. Système de gazon artificiel, comprenant :
une couche d'herbe artificielle comprenant un substrat et des fibres de poils se dressant à partir du substrat ;
une couche de remplissage, disposée sur le substrat et intercalée entre les fibres de poils, la couche de remplissage comprenant des granulés, dans lequel lesdits granulés comprennent au moins 60 % en poids de polybutylène adipate téréphtalate (PBAT) et un pigment ou mélange maître de pigments, dans lequel ledit pigment ou mélange maître de pigments est un pigment vert foncé configuré pour former une surface protectrice contre les rayons UV.

2. Système de gazon artificiel selon la revendication 1, dans lequel les granulés comprennent au moins 60 % en poids de PBAT, et de préférence au moins 70 % en poids et idéalement au moins 90 % en poids.

3. Système de gazon artificiel selon l'une quelconque des revendications précédentes, dans lequel les granulés ont une taille de diamètre dans la plage de 0,1-5 mm, et de préférence 0,5-5 mm, et de manière davantage préférée 1-5 mm, et de manière davantage préférée 1,5-4 mm, et de manière préférée entre toutes 1,5-3,5 mm, et avec une longueur dans la plage de 1-15 mm, et de préférence 1,5-10 mm, et de manière préférée entre toutes 1,5-5 mm.

4. Système de gazon artificiel selon l'une quelconque des revendications précédentes, dans lequel les granulés ont une dureté Shore D de 44 ou moins, et de préférence dans la plage de 25-44, et de manière davantage préférée 32-42, et de manière préférée entre toutes 34-40, mesurée comme indiqué dans la description.

5. Système de gazon artificiel selon l'une quelconque des revendications précédentes, dans lequel les granulés ont une résistance à la flexion, mesurée conformément à l'ISO 178:2019, dans la plage de 2-17 MPa, et de préférence 3-8 MPa, et de manière préférée entre toutes 4-6 MPa.

6. Système de gazon artificiel selon l'une quelconque des revendications précédentes, dans lequel les granulés ont un module d'élasticité en flexion, mesuré conformément à l'ISO 178:2019, de 50-250 MPa, et de préférence 55-150 MPa, et de manière préférée entre toutes 60-90 MPa.

7. Système de gazon artificiel selon l'une quelconque des revendications précédentes, dans lequel les granulés ont un étirement décalé (0,2 %), mesuré conformément à l'ISO 178:2019, de 1-10 MPa, et de préférence 2-7 MPa, et de manière préférée entre toutes 3-6 MPa.

8. Système de gazon artificiel selon l'une quelconque des revendications précédentes, dans lequel les granulés comprennent en outre 1 à 30 % en poids d'un autre polymère compostable, et de préférence au moins un parmi : PEF, PHA, PLA, PBS, PBSA, PCL, TPS et l'amidon, ou des combinaisons de ceux-ci.

9. Système de gazon artificiel selon l'une quelconque des revendications précédentes, dans lequel les granulés comprennent 1-30 % en poids d'un autre polymère biosourcé, et de préférence au moins un parmi :
PLA, PHA, PHB ou des combinaisons de ceux-ci.

10. Système de gazon artificiel selon l'une quelconque des revendications précédentes, dans lequel les granulés comprennent en outre un matériau de remplissage, dans lequel le matériau de remplissage comprend au moins un parmi : la craie, le talc, le kaolin, la fibre de bois, la lignocellulose, la cellulose, l'hémicellulose, la lignine, la fibre libérienne, le lin et le chanvre, et des combinaisons de ceux-ci.

11. Système de gazon artificiel selon l'une quelconque des revendications précédentes, comprenant en outre une couche résiliente comprenant une structure de tampon antichoc sous le substrat et une couche particulaire supplémentaire entre la structure de tampon antichoc et la couche de remplissage.

12. Système de gazon artificiel selon la revendication 11, dans lequel la couche particulaire supplémentaire comprend des particules d'au moins un parmi : le sable, le gravier, le caoutchouc, le liège, le bois, l'élastomère et les particules plastiques, ou des combinaisons de ceux-ci, et de préférence le sable.

13. Système de gazon artificiel selon l'une quelconque des revendications précédentes, dans lequel les granulés ont la forme d'ellipsoïdes.

14. Granulé destiné à être utilisé comme remplissage pour un système de gazon artificiel, dans lequel ledit granulé comprend au moins 60 % en poids de polybutylène adipate téréphtalate (PBAT) et un pigment ou mélange maître de pigments, dans lequel ledit pigment ou mélange maître de pigments est un pigment vert foncé configuré pour former une surface protectrice contre les rayons UV.

15. Granulé selon la revendication 14, dans lequel le granulé a une taille de diamètre dans la plage de 0,1-5 mm, et de préférence 0,5-5 mm, et de manière davantage préférée 1-5 mm, et de manière davantage préférée 1,5-4 mm, et de manière préférée entre toutes 1,5-3,5 mm, et avec une longueur dans la plage de 1-15 mm, et de préférence 1,5-10 mm, et de manière préférée entre toutes 1,5-5 mm.
